(19) Europäisches Patentamt
European Patent Office
Office européen des brevets

(11) **EP 3 867 630 B1**

(12) **EUROPÄISCHE PATENTSCHRIFT**

(45) Veröffentlichungstag und Bekanntmachung des Hinweises auf die Patenterteilung:
**30.11.2022 Patentblatt 2022/48**

(21) Anmeldenummer: **19797573.3**

(22) Anmeldetag: **11.10.2019**

(51) Internationale Patentklassifikation (IPC):
***G01N 21/41*** *(2006.01)*

(52) Gemeinsame Patentklassifikation (CPC):
**G02B 21/18; G01N 21/4133**

(86) Internationale Anmeldenummer:
**PCT/EP2019/077619**

(87) Internationale Veröffentlichungsnummer:
**WO 2020/078848 (23.04.2020 Gazette 2020/17)**

(54) **VERFAHREN UND MIKROSKOP ZUR BESTIMMUNG DES BRECHUNGSINDEX EINES OPTISCHEN MEDIUMS**

METHOD AND MICROSCOPE FOR DETERMINATION OF THE REFRACTIVE INDEX OF AN OPTICAL MEDIUM

PROCEDE ET MICROSCOPE POUR LA DETERMINATION DE L'INDICE DE REFRACTION D'UN MILIEU OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2018 DE 102018126002**

(43) Veröffentlichungstag der Anmeldung:
**25.08.2021 Patentblatt 2021/34**

(73) Patentinhaber: **Leica Microsystems CMS GmbH 35578 Wetzlar (DE)**

(72) Erfinder:
• **WEISS, Alexander**
  **35440 Linden (DE)**
• **SCHUMANN, Christian**
  **35423 Lich (DE)**
• **CAPELLMANN, Ronja**
  **35578 Wetzlar (DE)**

(74) Vertreter: **Schaumburg und Partner Patentanwälte mbB Postfach 86 07 48 81634 München (DE)**

(56) Entgegenhaltungen:
**DE-A1-102006 021 996**

• **J. P. MCCLYMER: "Note: Index of refraction measurement using the Fresnel equations", REVIEW OF SCIENTIFIC INSTRUMENTS., Bd. 85, Nr. 8, 1. August 2014 (2014-08-01) , Seite 086107, XP055661292, US ISSN: 0034-6748, DOI: 10.1063/1.4890667**
• **MING-HORNG CHIU ET AL: "Complex refractive-index measurement based on Fresnel's equations and the uses of heterodyne interferometry", APPLIED OPTICS, Bd. 38, Nr. 19, 1. Juli 1999 (1999-07-01), Seite 4047, XP055661295, WASHINGTON, DC; US ISSN: 0003-6935, DOI: 10.1364/AO.38.004047**

**Beschreibung**

Die Erfindung betrifft ein Verfahren zur Bestimmung des Brechungsindex eines optischen Mediums in einem Mikroskop, das ein einem Probenraum zugewandtes Objektiv aufweist, wobei das optische Medium mit dem zu bestimmenden Brechungsindex eines von zwei optischen Medien ist, die in dem Probenraum an zwei entgegengesetzte Oberflächen eines Deck- oder Tragglases grenzen und dadurch zwei teilreflektierende Grenzflächen bilden, die in unterschiedlichen Abständen von dem Objektiv angeordnet sind. Der Erfindung betrifft ferner ein Mikroskop mit einer Einrichtung zur Bestimmung des Brechungsindex eines optischen Mediums.

Die lichtmikroskopische Abbildung einer Probe wird durch die verschiedenen optischen Medien beeinflusst, die in einem Probenraum eines Mikroskops aneinandergrenzen. Diese optischen Medien bilden infolge ihrer unterschiedlichen Brechungsindizes Grenzflächen, an denen sich der Brechungsindex sprunghaft ändert. Jede dieser Grenzflächen wirkt sich abhängig davon, wie groß der Sprung des Brechungsindex dort ist, unterschiedlich auf die optische Abbildung aus. Insbesondere die sphärische Aberration wird durch die sprunghafte Variation des Brechungsindex signifikant beeinflusst. Zu den an der Abbildung mitwirkenden optischen Medien zählen üblicherweise ein Deck- oder Tragglas sowie die beiden Medien, die von entgegengesetzten Seiten her an das Deck- oder Tragglas grenzen. Letztere sind beispielsweise durch ein Immersionsmedium, das sich zwischen dem Deck- oder Tragglas und dem Objektiv befindet, und ein die Probe umgebendes Einbettmedium gebildet.

Um eine wirksame Korrektur der Abbildungsfehler, die durch eine sprunghafte Variation des Brechungsindex beeinflusst werden, zu ermöglichen, ist es wichtig, die Brechungsindizes der verwendeten optischen Medien zu kennen. Dabei sind häufig die Brechungsindizes des Deck- oder Tragglases und des Immersionsmediums von vornherein mit hoher Genauigkeit bekannt. Dies gilt jedoch nicht für den Brechungsindex des die Probe umgebenden Einbettmediums. Dieser Brechungsindex ist deshalb in einer eigens hierfür vorgesehenen Messung außerhalb oder innerhalb des Mikroskops zu ermitteln.

Eine Messung des Brechungsindex außerhalb des Mikroskops ist mit der Unwägbarkeit einer nach der Messung erfolgenden Probenpräparation verbunden. Eine Korrelation des außerhalb des Mikroskops gewonnenen Messwertes mit dem in der lichtmikroskopischen Abbildung tatsächlich wirksamen Brechungsindex kann nicht sichergestellt werden. So wird in manchen Anwendungen, z. B. in der Lebendzellmikroskopie, der Brechungsindex des Einbettmediums signifikant von der Probe beeinflusst und ist somit außerhalb der mikroskopischen Präparation gar nicht mit hinreichender Genauigkeit messbar.

DE 10 2006 021996 A1 offenbart ein Mikroskop zur internen Totalreflexionsmikroskopie, kurz TIRF, das eine Bestimmung des Brechungsindex innerhalb des Mikroskops ermöglicht. Dieses TIRF-Mikroskop umfasst ein Objektiv, durch das die Probe mit einer evaneszenten Beleuchtung beaufschlagt wird. Das an der Probe totalreflektierte Beleuchtungslicht wird mittels eines Detektors erfasst. Anhand des Übergangs, an dem die Intensität des an der Probe reflektierten Beleuchtungslichts von einem maximalen Wert auf Null abfällt, wird der Einfallswinkel der Totalreflexion bestimmt. Auf Basis des Einfallswinkels wird dann der Brechungsindex ermittelt. Eine derartige Bestimmung des Brechungsindex erfordert jedoch ein Immersionsobjektiv mit hoher numerischer Apertur, um die Probe unter Totalreflexion beleuchten zu können. Ein solches Objektiv ist aufwändig zu fertigen und somit teuer.

Das Dokument J. P. MCCLYMER, "Note: Index of refraction measurement using the Fresnel equations", REVIEW OF SCIENTIFIC INSTRUMENTS., US, (20140801), vol. 85, no. 8, p. 086107 offenbart ein Verfahren zur Ermittlung des Brechungsindexes eines Mediums anhand einer Untersuchung des Reflexionsverhaltens von nicht polarisiertem Licht im Bereich des Brewster-Winkels und Anwendung der Fresnelschen Gleichungen.

Das Dokument MING-HORNG CHIU ET AL, "Complex refractive-index measurement based on Fresnel's equations and the uses of heterodyne interferometry", APPLIED OPTICS, WASHINGTON, DC; US, (19990701), vol. 38, no. 19, p. 4047 offenbart ein Verfahren zur Ermittlung des Brechungsindexes eines Mediums anhand einer Untersuchung des Phasenunterschieds von durch das Medium reflektiertem s- und p- linear polarisierten Licht.

Zum Stand der Technik wird ferner auf DE 10 2010 030 430 A1 verwiesen, worin eine triangulierende Autofokuseinrichtung für ein Mikroskop offenbart ist. Diese Autofokuseinrichtung erzeugt ein Spaltbild auf der Probe, das auf einen positionssensitiven Detektor abgebildet wird. Über die durch den Detektor erfasste Einfallsposition wird der Autofokus gesteuert.

Es ist Aufgabe der Erfindung, ein Verfahren und ein Mikroskop anzugeben, die eine einfache und präzise Bestimmung des Brechungsindex eines optischen Mediums ermöglichen.

Diese Aufgabe wird durch das Verfahren nach Anspruch 1 und das Mikroskop nach Anspruch 9 gelöst. Vorteilhafte Weiterbildungen sind jeweils in den abhängigen Ansprüchen angegeben.

Das erfindungsgemäße Verfahren dient zur Bestimmung des Brechungsindex eines optischen Mediums in einem Mikroskop, das ein einem Probenraum zugewandtes Objektiv aufweist, wobei das optische Medium mit dem zu bestimmenden Brechungsindex eines von zwei optischen Medien ist, die in dem Probenraum an zwei entgegengesetzte Oberflächen eines Deck- oder Tragglases grenzen und dadurch zwei teilreflektierende Grenzflächen bilden, die in unterschiedlichen Abständen von dem Objektiv angeordnet sind. Bei dem Verfahren wird ein Messlichtbündel durch das Objektiv unter schrägem Einfall auf das Deck- oder Tragglas gelenkt. Es werden zwei räumlich voneinander getrennte Reflexionslichtbündel erzeugt, indem das Messlichtbündel jeweils zum Teil an den beiden Grenzflächen reflektiert wird. Die beiden Reflexionslichtbündel werden durch das Objektiv empfangen und auf einen positionssensitiven Detektor gelenkt. Die Intensitäten der beiden Reflexionslichtbündel werden mittels des positionssensitiven Detektors erfasst. Auf Grundlage der erfassten Intensitäten der beiden Reflexionslichtbündel wird der Brechungsindex des optischen Mediums ermittelt.

Unter Deck- oder Tragglas wird in dieser Anmeldung insbesondere ein eine Probe bedeckendes Deckglas, ein Objektträger, ein Boden einer Petrischale oder ein Boden eines Näpfchens einer Mikrotiterplatte verstanden.

Die Intensitäten der beiden Reflexionslichtbündel hängen von der Reflexion und der Transmission des Messlichtbündels an den beiden Grenzflächen ab, die durch das Deck- oder Tragglas und die beiden optischen Medien, die von entgegengesetzten Seiten her an das Deck- oder Tragglas grenzen, definiert sind. Die Reflexions- und Transmissionsvorgänge, auf denen letztlich die Intensitäten der beiden räumlich voneinander getrennten Reflexionslichtbündel beruhen, werden somit wesentlich durch die Brechungsindizes des Deck- oder Tragglases sowie der an das Deck- oder Tragglas grenzenden optischen Medien bestimmt. Sind der Brechungsindex des Deck- oder Tragglases sowie der Brechungsindex eines der beiden daran angrenzenden optischen Medien bekannt, so lässt sich der Brechungsindex des anderen Mediums zuverlässig aus den durch den positionssensitiven Detektor erfassten Intensitäten und der Kenntnis des Einfallswinkels des Messlichtbündels im Probenraum bestimmen.

Die räumliche Trennung der beiden Reflexionslichtbündel wird dadurch erzielt, dass das Messlichtbündel schräg auf das Deck- oder Tragglas gelenkt wird. Da die beiden teilreflektierenden Grenzflächen axial zueinander versetzt, d.h. entlang der optischen Achse des Objektivs voneinander beabstandet sind, sorgt der schräge Einfall des Messlichtbündels auf die beiden Grenzflächen dafür, dass die beiden Reflexionslichtbündel auf unterschiedlichen optischen Wegen zurück in das Objektiv reflektiert werden. Im Ergebnis können so die beiden Reflexionslichtbündel auf dem positionssensitiven Detektor an verschiedenen Einfallsorten getrennt voneinander erfasst werden.

Die Erfindung ermöglicht eine einfache und präzise Bestimmung des Brechungsindex eines optischen Mediums innerhalb des Mikroskops. Diese kann gewinnbringend zur Einstellung weiterer Mikroskopparameter genutzt werden. Insbesondere ermöglicht die Erfindung eine Automatisierung einer am Mikroskopobjektiv vorgesehenen Korrektionseinsteinstellung für unterschiedliche Einbettmedien, indem beispielsweise eine in dem Mikroskopobjektiv enthaltene Korrekturlinse in Abhängigkeit des ermittelten Brechungsindex automatisch angesteuert wird. Auch ist es möglich, eine Modellierung einer Punktspreizfunktion im Rahmen einer Dekonvolution in Abhängigkeit des ermittelten Brechungsindex vorzunehmen.

In einer vorteilhaften Weiterbildung wird der Brechungsindex des einen optischen Mediums in Abhängigkeit des Brechungsindex des anderen optischen Mediums, des Brechungsindex des Deck- oder Tragglases und der numerischen Apertur des Messlichtbündels ermittelt. Dabei kann die numerische Apertur des Messlichtbündels über die Brennweite des Objektivs und die Position des Messlichtbündels in der Objektivpupille bestimmt werden.

Die Reflexions- und Transmissionsgrade der beiden Grenzflächen, die Brechungsindizes des Deck- oder Tragglases und der optischen Medien, welche die jeweilige Grenzfläche definieren, und die numerische Apertur des Messlichtbündels sind über die sogenannten Fresnelschen Formeln miteinander verknüpft. Die Reflexions- und Transmissionsgrade lassen sich auf Basis der Intensitäten der beiden Reflexionslichtbündel bestimmen. Sind zudem der Brechungsindex des Deck- oder Tragglases, die numerische Apertur des Messlichtbündels sowie der Brechungsindex eines der beiden optischen Medium bekannt, so kann der Brechungsindex des anderen Mediums einfach berechnet werden.

In einer bevorzugten Ausführungsform wird der Brechungsindex des einen optischen Mediums auf Grundlage des Verhältnisses der Intensitäten der beiden Reflexionslichtbündel ermittelt. Dadurch ist die erfindungsgemäße Messung des Brechungsindex gleichsam selbstrefentiell. Dies bedeutet, dass der Brechungsindex unabhängig von der Intensität des Messlichtbündels bestimmt werden kann, d.h. keine Kenntnis dieser Intensität erforderlich ist.

Vorzugsweise wird das Messlichtbündel in einen Teilbereich einer Eintrittspupille des Objektivs geleitet, der gegenüber der Mitte der Eintrittspupille versetzt ist. Auf diese Weise wird die Eintrittspupille des Objektivs durch das Messlichtbündel dezentral unterleuchtet, wodurch das Messlichtbündel beim Austritt aus dem Objektiv schräg zu dessen optischer Achse gestellt wird. Diese dezentrale Unterleuchtung der Eintrittspupille ermöglicht so auf besonders einfache Weise die gewünschte räumliche Trennung der an den beiden Grenzflächen erzeugten Reflexionslichtbündel. Die Reflexionslichtbündel werden dann vorzugsweise so zurück in das Objektiv geleitet, dass sie in der der Ausbreitungsrichtung des Messlichtbündels entgegengesetzten Richtung einen anderen Teilbereich der Eintrittspupille durchsetzen, der gegenüber dem vorgenannten Teilbereich der Eintrittspupille versetzt ist.

In einer vorteilhaften Ausführung ist vorgesehen, dass durch das Messlichtbündel an den beiden Grenzflächen jeweils ein Messmuster erzeugt wird und dass die beiden Messmuster durch die beiden Reflexionslichtbündel auf den positionssensitiven Detektor abgebildet werden. So ist es beispielsweise möglich, das jeweilige Messmuster in Form eines Bildes einer Spaltblende zu generieren, die Teil der das Messlichtbündel emittierenden Lichtquelle ist oder dieser vorgeordnet ist.

Vorzugsweise werden die beiden auf den positionssensitiven Detektor abgebildeten Messmuster in Form einer räumlichen Intensitätsverteilung erfasst, aus der die Intensitäten der beiden Reflexionslichtbündel bestimmt werden. Sind die auf den positionssensitiven Detektor abgebildeten Messmuster beispielsweise durch die Bilder einer Spaltblende gegeben, so erhält man die vorgenannte Intensitätsverteilung, indem das jeweilige Blendenbild auf dem Detektor über eine Richtung integriert wird, die parallel zur Längsausrichtung der Spaltblende liegt. Die auf dem Detektor erfasste Lage des jeweiligen Blendenbildes, die von dem Abstand zwischen der zugehörigen, teilreflektierenden Grenzfläche und dem Objektiv abhängt, spiegelt sich in diesem Fall durch einen in der Intensitätsverteilung auftretenden Peak wider.

Vorzugsweise ist das optische Medium, dessen Brechungsindex erfindungsgemäß zu bestimmen ist, ein Einbettmedium für eine Probe, das an eine der beiden Oberflächen des Deck- oder Tragglases grenzt. In diesem Fall ist das andere optische Medium, dessen Brechungsindex von vornherein bekannt ist, vorzugsweise ein Immersionsmedium, das einerseits an die andere Oberfläche des Deck- oder Tragglases und andererseits an das Objektiv grenzt. Es versteht sich jedoch von selbst, dass das erfindungsgemäße Verfahren hierauf nicht beschränkt ist. So ist es möglich, den Brechungsindex jedes beliebigen Mediums zu ermitteln, sofern dieses unmittelbar an eine der beiden Oberflächen des Deck-

oder Tragglases grenzt und dadurch eine teilreflektierende Grenzfläche bildet.

Das erfindungsgemäße Mikroskop umfasst einen Probenraum mit einem Deck- oder Tragglas und zwei optischen Medien, ein dem Probenraum zugeordnetes Objektiv, zwei teilreflektierende Grenzflächen, die in dem Probenraum in unterschiedlichen Abständen von dem Objektiv angeordnet und dadurch gebildet sind, dass die beiden optischen Medien in dem Probenraum an zwei entgegengesetzte Oberflächen des Deck- oder Tragglases grenzen, sowie eine Einrichtung zur Bestimmung des Brechungsindex eines der beiden optischen Medien. Die vorgenannte Einrichtung ist ausgebildet, ein Messlichtbündel durch das Objektiv unter schrägem Einfall auf das Deck- oder Tragglas zu lenken. Ferner ist die Einrichtung ausgebildet, zwei räumlich voneinander getrennte Reflexionslichtbündel zu erzeugen, indem das Messlichtbündel jeweils zum Teil an den beiden Grenzflächen reflektiert wird. Die Einrichtung weist einen positionssensitiven Detektor auf und ist ausgebildet, die beiden Reflexionslichtbündel durch das Objektiv zu empfangen und auf den positionssensitiven Detektor zu lenken. Der positionssensitive Detektor ist ausgebildet, die Intensitäten der beiden Reflexionslichtbündel zu erfassen. Die zur Bestimmung des Brechungsindex vorgesehene Einrichtung umfasst ferner eine Ermittlungseinheit, die ausgebildet ist, auf Grundlage der erfassten Intensitäten der beiden Reflexionslichtbündel den Brechungsindex des optischen Mediums zu ermitteln.

Vorzugsweise weist die Einrichtung eine Aperturblende mit einer Blendenöffnung auf, die dezentriert mit Abstand zur optischen Achse des Objektivs angeordnet ist. Die Aperturblende begrenzt den Querschnitt des Messlichtbündels derart, dass letzteres die Eintrittspupille des Objektivs dezentral unterleuchtet und dadurch schräg zur optischen Achse aus dem Objektiv austritt. Auf diese Weise ist sichergestellt, dass die an den beiden teilreflektierenden Grenzflächen erzeugten Reflexionslichtbündel räumlich voneinander getrennt zurück in das Objektiv geleitet und letztlich auf dem positionssensitiven Detektor an verschiedenen Einfallsorten erfasst werden können. Die dezentrale Unterleuchtung der Eintrittspupille des Objektivs hat ferner den Vorteil, dass achsnahe Strahlanteile vermieden werden, die sogenannte Reflexe erster Ordnung verursachen, die am stärksten an den Flächenscheiteln der das Objektiv bildenden Linsen entstehen und das Signal-Rausch-Verhältnis verschlechtern.

In einer bevorzugten Ausführung hat die Einrichtung eine Lichtquelle, die das Messlichtbündel im Infrarot-Wellenlängenbereich emittiert. Dies hat den Vorteil, dass die durch das Messlichtbündel an dem Deck- oder Tragglas erzeugten Messmuster für das menschliche Auge nicht sichtbar sind und somit die Beobachtung der Probe durch das Mikroskop nicht stören. Es ist jedoch ebenso möglich, ein Messlichtbündel im sichtbaren Wellenlängenbereich einzusetzen. Falls das Messlichtbündel aus Licht im Infrarot-Wellenlängenbereich besteht, kann mittels eines geeigneten Modells des Mediums oder einer Kalibration auf den Brechungsindex im sichtbaren Spektralbereich geschlossen werden.

Vorzugsweise ist der positionssensitive Detektor ein Zeilendetektor, der so ausgerichtet ist, dass er die Intensitätsverteilung der beiden Reflexionslichtbündel, welche die beiden Bilder der Messmuster widerspiegelt, in ihrer Gesamtheit erfassen kann. Alternativ kann der positionssensitive Detektor auch als Flächendetektor, z.B. als zweidimensionale CCD-Kamera ausgeführt sein.

In einer vorteilhaften Ausgestaltung hat die Ermittlungseinheit einen Speicher, in dem Parameter zur Ermittlung des Brechungsindex des optischen Mediums speicherbar sind. Dadurch ist es beispielsweise möglich, die für die Ermittlung des Brechungsindex relevanten Parameter für eine Vielzahl von Mikroskopkomponenten vorzuhalten, die je nach Anwendung wahlweise in dem Mikroskop zum Einsatz kommen. So können etwa die Brechungsindizes verschiedener Immersionsmedien und verschiedener Deck- oder Traggläser sowie die optischen Daten verschiedener Objektive gespeichert und nach Bedarf zur Bestimmung des gesuchten Brechungsindex ausgelesen werden.

Vorzugsweise sind die entgegengesetzten Oberflächen des Deck- oder Tragglases planparallel zueinander ausgebildet.

Die erfindungsgemäße Einrichtung ist aufgrund ihrer vorliegend beschriebenen strukturellen und funktionellen Eigenschaften auch dazu geeignet, in dem Mikroskop als Autofokuseinrichtung genutzt zu werden. Zudem bietet die Einrichtung aufgrund ihrer Eigenschaften die Möglichkeit, neben dem Brechungsindex eines optischen Mediums andere, die lichtmikroskopische Abbildung beeinflussende Größen zu bestimmen, wie etwa die Dicke und/oder die Verkippung

4

des Deck- oder Tragglases.

Die Erfindung ist auf eine Vielzahl von Mikroskoptypen anwendbar, z.B. inverse oder aufrechte Durchlichtmikroskope.

Die Erfindung wird im Folgenden anhand der Figuren näher erläutert. Darin zeigen:

Figur 1    eine schematische Darstellung eines inversen Durchlichtmikroskops als erstes Ausführungsbeispiel;

Figur 2    eine zur Bestimmung des Brechungsindex eines optischen Mediums bestimmte Einrichtung, die Teil des Mikroskops nach Figur 1 ist;

Figur 3    eine schematische Darstellung, die einen Probenraum des Mikroskops nach Figur 1 zeigt;

Figur 4    eine durch einen positionssensitiven Detektor der Einrichtung nach Figur 2 erfasste Intensitätsverteilung;

Figur 5    ein Flussdiagramm, das eine spezielle Ausführungsform des erfindungsgemäßen Verfahrens zur Bestimmung des Brechungsindex zeigt;

Figur 6    eine Kennlinie, die das Verhältnis der Intensitäten der beiden Reflexionslichtbündel in Abhängigkeit des Brechungsindex des Einbettmediums angibt; und

Figur 7    eine schematische Darstellung eines aufrechten Durchlichtmikroskops, das ein zweites Ausführungsbeispiel des erfindungsgemäßen Mikroskops bildet.

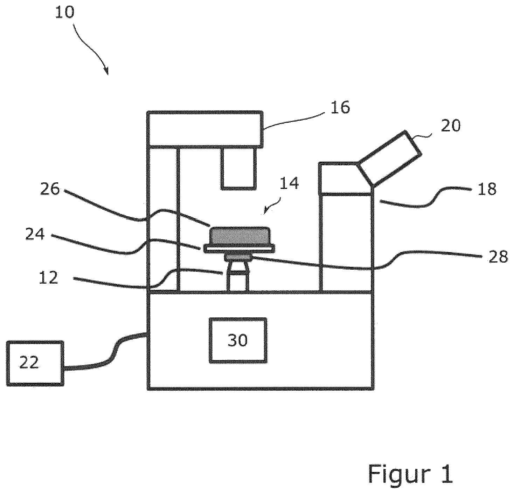

Figur 1 zeigt ein Mikroskop 10 als erstes Ausführungsbeispiel, auf das die erfindungsgemäße Brechungsindexbestimmung anwendbar ist.

Das Mikroskop 10 ist als inverses Durchlichtmikroskop ausgeführt. Es umfasst demnach ein Objektiv 12, das von unten einem in Figur 1 mit dem Bezugszeichen 14 versehenen Probenraum zugewandt ist, sowie eine Lichtquelle 16, die von oben auf den Probenraum 14 gerichtet ist. Das Mikroskop 10 weist ferner einen Tubus 18 mit einem Okular 20 auf, durch das eine Bedienperson ein durch das Objektiv 12 eingefangenes Probenbild betrachten kann. Zudem ist eine Steuereinheit 22 vorgesehen, welche die verschiedenen Mikroskopkomponenten ansteuert.

In dem Probenraum des Mikroskops 10 befindet sich ein Deckglas 24 zum Bedecken einer in Figur 1 nicht explizit dargestellten Probe. Auf dem Deckglas 24 befindet sich ein optisches Medium 26, in das die Probe eingebettet ist und das im Weiteren als Einbettmedium 26 bezeichnet wird. In dem Probenraum 14 ist ferner ein Immersionsmedium 28 angeordnet, das in Figur 1 von oben an das Objektiv 12 und von unten an das Deckglas 24 grenzt.

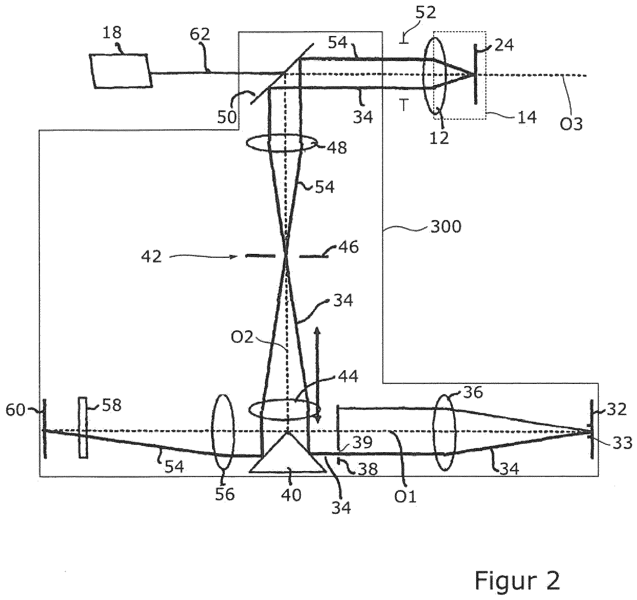

Das Mikroskop 10 weist ferner eine in Figur 1 allgemein mit dem Bezugszeichen 30 bezeichnete Einrichtung auf, die dazu dient, den Brechungsindex des die Probe aufnehmenden Einbettmediums 26 zu ermitteln. Die Einrichtung ist in Figur 2 genauer dargestellt.

Wie in Figur 2 gezeigt, weist die Einrichtung 30 eine Lichtquelle 32 auf, die ein Messlichtbündel 34 im Infrarot-Wellenlängenbereich emittiert. Die Lichtquelle 32 ist beispielweise eine LED, die eine Spaltblende 33 aufweist, durch die das Messlichtbündel 34 auf eine Beleuchtungsoptik 36 gerichtet wird. Nach Durchtritt durch die Beleuchtungsoptik 36 fällt das Messlichtbündel 34 auf eine Aperturblende 38, die mittig auf der optischen Achse O1 der Beleuchtungsoptik 36 positioniert ist und eine Blendenöffnung 39 aufweist, die dezentriert mit Abstand zur optischen Achse O1 der Beleuchtungsoptik 36 angeordnet ist. Die Blendenöffnung der Aperturblende 38 begrenzt den Strahlquerschnitt des Messlichtbündels 34 derart, dass nur der in Figur 2 unterhalb der optischen Achse O1 der Beleuchtungsoptik 36 liegende Teil des Messlichtbündels 34 die Aperturblende in Richtung eines Umlenkprismas 40 passiert.

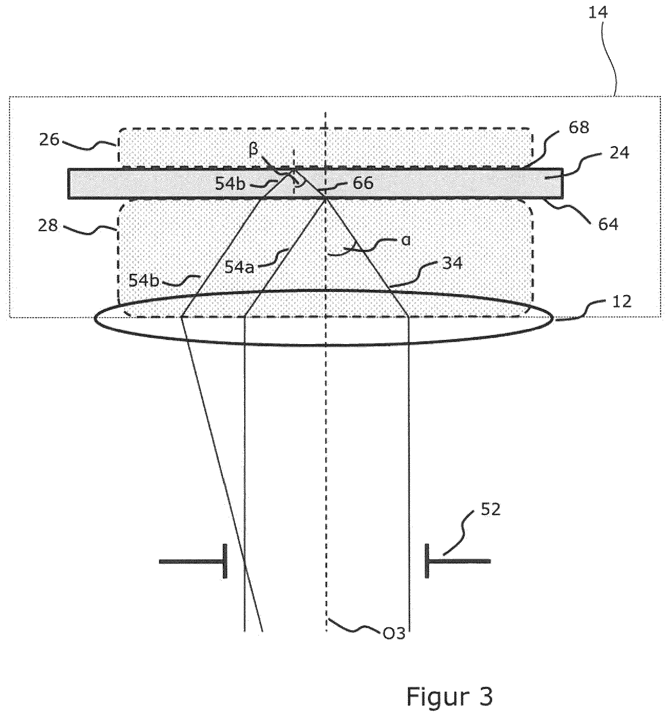

Das in seinem Strahlquerschnitt begrenzte Messlichtbündel 34 wird an dem Umlenkprisma 40 in eine Transportoptik 42 reflektiert, die aus einer längs ihrer optischen Achse O2 verschiebbaren Fokussierlinse 44, einer Streulichtblende 46 und einer weiteren Linse 48 gebildet ist. Nach Durchtritt durch die Transportoptik 42 fällt das Messlichtbündel 34 auf einen dichroitischen Strahlteiler 50, der Licht im Infrarot-Wellenlängenbereich reflektiert, während er Licht im sichtbaren Bereich transmittiert. Durch den dichroitischen Spiegel 50 wird das Messlichtbündel 34 in Richtung des Objektivs 12 reflektiert. Das an dem dichroitischen Spiegel 50 reflektierte Messlichtbündel 34 verläuft dabei mit einem Parallelversatz zur optischen Achse O3 des Objektivs 12. Auf diese Weise wird das Messlichtbündel 34 in einen Teilbereich einer Eintrittspupille 52 des Objektivs 12 geleitet, der gegenüber der optischen Achse O3 des Objektivs 12 und damit gegenüber der Mitte der Eintrittspupille 52 seitlich versetzt ist (vgl. Figur 3). Die Eintrittspupille 52 des Objektivs 12 wird somit dezentral unterleuchtet, was dazu führt, dass das Messlichtbündel 34 unter einem Winkel $\alpha$ schräg zur optischen Achse O3 in den Probenraum 14 gelenkt wird.

Der Einfachheit halber sind in der Darstellung nach Figur 2 das Einbettmedium 26 und das Immersionsmedium 28, die in dem Probenraum 14 von entgegengesetzten Seiten her an das Deckglas 24 grenzen, weggelassen. Das unter schrägem Einfall in den Probenraum 14 geleitete Messlichtbündel 34 wird, wie weiter unten unter Bezugnahme auf Figur 3 genauer erläutert ist, an dem Deckglas 24 reflektiert, wodurch zwei in das Objektiv 12 zurückgeleitete Reflexionsbündel entstehen, die in der schematischen Ansicht nach Figur 2 (im Unterschied zur Detailansicht nach Figur 3) in Form eines einzigen, mit 54 bezeichneten Lichtbündels dargestellt sind.

Nach Durchtritt durch das Objektiv 12 fallen die beiden Reflexionslichtbündel 54 auf den dichroitischen Spiegel 50, der die Reflexionslichtbündel 54 in die Transportoptik 42 lenkt. Nach Passieren der Transportoptik 42 fallen die Reflexionslichtbündel 54 auf das Umlenkprisma 40, das die Reflexionslichtbündel 54 auf eine Detektoroptik 56 reflektiert. Die Detektoroptik 56 richtet die Reflexionslichtbündel 54 auf ein Spektralfilter 58, das nur für Licht im Infrarot-Wellenlängenbereich durchlässig ist und Streulicht außerhalb dieses Wellenlängenbereichs blockiert. Die durch das Spektralfilter 58 transmittierten Reflexionslichtbündel 54 fallen schließlich auf einen positionssensitiven Detektor 60, der im Stande ist, die Intensitäten der Reflexionslichtbündel 54 ortsaufgelöst zu erfassen.

In der Figur 2 ist der Vollständigkeit halber auch die über den dichroitischen Spiegel 50 realisierte Ankopplung des Tubus 18 an die Einrichtung 30 veranschaulicht. Demnach dient der dichroitische Spiegel 50 im vorliegenden Ausführungsbeispiel auch dazu, das für die eigentliche mikroskopische Bildgebung genutzte, sichtbare Detektionslicht 62, welches das Objektiv 12 aus dem Probenraum 14 in Richtung des dichroitischen Spiegels 50 leitet, durch Transmission dem Tubus 18 zuzuführen.

In Figur 3 ist genauer gezeigt, wie durch Reflexion des Messlichtbündels die beiden (in Figur 3 mit 54a, 54b bezeichnet) Reflexionslichtbündel generiert werden, die erfindungsgemäß zur Bestimmung des Brechungsindex des Einbettmediums 26 genutzt werden. Demnach wird das die Eintrittspupille 52 des Objektivs 12 dezentral unterleuchtende Messlichtbündel 34 durch das Objektiv 12 unter einem Winkel $\alpha$ schräg zur optischen Achse O3 auf die dem Objektiv 12 zugewandte, in Figur 3 mit 64 bezeichnete Vorderfläche des Deckglases 24 gelenkt. Da das Deckglas 24 und das an dessen Vorderfläche 64 grenzende Immersionsmedium 28 unterschiedliche Brechungsindizes aufweisen, bilden die Vorderfläche 64 des Deckglases 24 und das daran angrenzende Immersionsmedium 28 eine erste Grenzfläche, an der das einfallende Messlichtbündel 34 zum Teil reflektiert wird. Der an dieser ersten Grenzfläche reflektierte Teil des Messlichtbündels erzeugt das erste Reflexionslichtbündel 54a, das zurück in das Objektiv 12 geleitet wird.

Der andere Teil 66 des Messlichtbündels 34, der die erste Grenzfläche transmittiert, wird beim Eintritt in das Deckglas 24 von der optischen Achse O3 des Objektivs 12 weggebrochen und schließt mit dieser einen Winkel $\beta$ ein, der größer als der Winkel $\alpha$ ist. Dieser transmittierte Teil 66 des Messlichtbündels 34 wird zum Teil an einer zweiten Grenzfläche reflektiert, die durch die Rückfläche 68 des Deckglases 24 und das daran angrenzende Einbettmedium 26 definiert ist, das einen anderen Brechungsindex als das Deckglas 24 aufweist. Durch diese zweite Teilreflexion des Messlichtbündels 34 an der zweiten Grenzfläche wird das zweite Reflexionslichtbündel 54b erzeugt, das durch die Vorderfläche 64 des Deckglases 24 tritt und dann zurück in das Objektiv 12 gelangt.

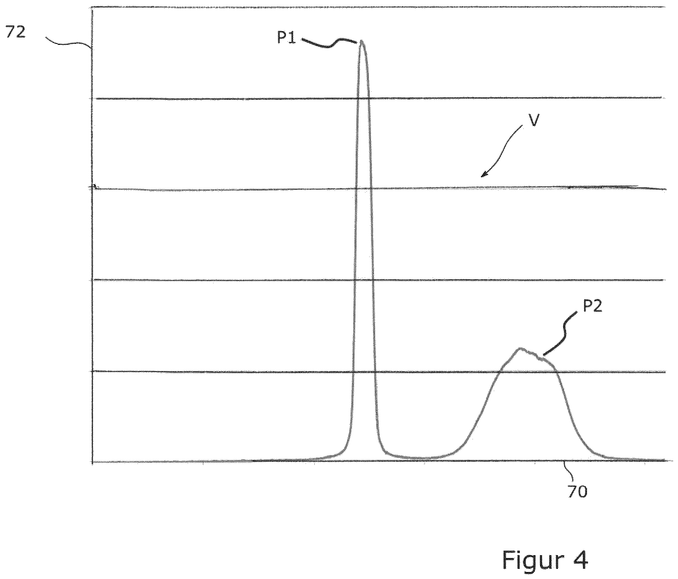

Wie in der Darstellung nach Figur 3 veranschaulicht ist, sorgt der schräge Einfall des Messlichtbündels 34 in den Probenraum 14 dafür, dass die durch die beiden Teilreflexionen an der Vorderfläche 64 bzw. der Rückfläche 68 des Deckglases 24 erzeugten Reflexionslichtbündel 54a, 54b auf unterschiedlichen optischen Wegen zurück in das Objektiv 12 gelangen. Auf diese Weise treffen die beiden Reflexionslichtbündel 54a, 54b an verschiedenen Einfallsorten auf den positionssensitiven Detektor 60. Mit anderen Worten, werden die beiden an der Vorderfläche 64 bzw. der Rückfläche 68 des Deckglases 24 in Form der Spaltbilder generierten Messmuster räumlich voneinander getrennt auf den positionssensitiven Detektor 60 abgebildet, wie in dem Diagramm nach Figur 4 veranschaulicht ist.

Figur 4 zeigt eine beispielhafte Intensitätsverteilung V, welche die beiden Reflexionslichtbündel 54a, 54b gemeinsam auf dem positionssensitiven Detektor 60 erzeugen. Dabei gibt die Abszisse 70 des Diagramms den Einfallsort auf dem Detektor 60 und die Ordinate 72 die an dem jeweiligen Einfallsort gemessene Intensität wider. Die Intensitätsverteilung V nach Figur 4 zeigt zwei Peaks, von denen der mit P1 bezeichnete Peak dem ersten Reflexionslichtbündel 54a und der mit P2 bezeichnete Peak dem zweiten Reflexionslichtbündel 54b zugeordnet ist. Aus dem Umstand, dass der Peak P1 höher und schärfer als der Peak P2 ist, lässt sich erkennen, dass in dem Beispiel nach Figur 3 das Messlichtbündel 34 auf die Vorderfläche 64 des Deckglases 24 fokussiert ist. Dies bedeutet, dass an der Vorderfläche 64 des Deckglases 24 ein fokussiertes Bild der Spaltblende 33 der Lichtquelle 32 erzeugt wird, während an der Rückfläche 68 des Deckglases 24 ein demgegenüber defokussiertes Bild der Spaltblende 33 entsteht. Dies korrespondiert insoweit mit der Darstellung nach Figur 3, als die erste Teilreflektion an der Vorderfläche 64 des Deckglases 24 an einem Punkt stattfindet, der auf die optische Achse O3 des Objektivs 12 zentriert ist. Demgegenüber findet die zweite Teilreflexion an der Rückfläche 38 des Deckglases 24 an einem hierzu quer zur optischen Achse O3 versetzten Punkt statt. Die Flächen unterhalb der in Figur 4 gezeigten Peaks P1, P2 sind jeweils ein Maß für die Intensität des jeweiligen Reflexionslichtbündels 54a, 54b.

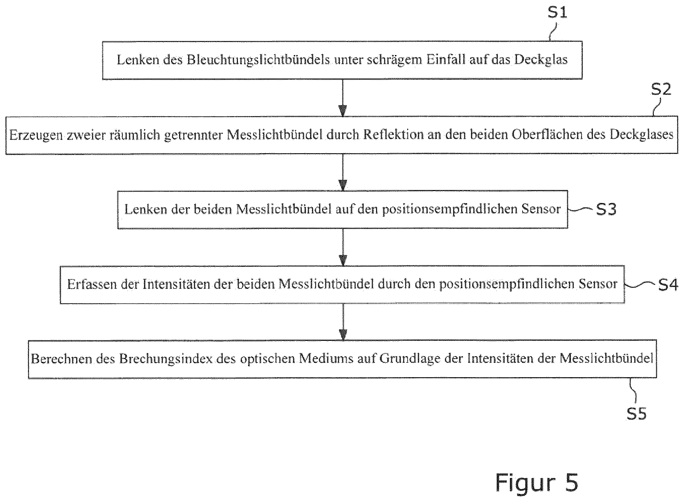

Figur 5 zeigt ein Flussdiagramm, das rein beispielhaft veranschaulicht, wie der Brechungsindex des Einbettmediums 26 erfindungsgemäß ermittelt werden kann.

In einem ersten Schritt S1 wird das Messlichtbündel 34 durch das Objektiv 12 in den Probenraum 18 geleitet. Nach Durchtritt durch die Immersionsflüssigkeit 28 trifft das Messlichtbündel 34, wie in Figur 3 gezeigt, unter dem Winkel $\alpha$ schräg auf die Vorderfläche 64 des Deckglases 24. Der Winkel $\alpha$ kann aus dem Abstand zwischen dem Objektiv 12 und der Vorderfläche 64 des Deckglases 24 sowie der numerischen Apertur des Messlichtbündels 34 bestimmt werden. Dabei ergibt sich die numerische Apertur 34 des Messlichtbündels anhand der Brennweite des Objektivs 12 und der Position des Messlichtbündels 34 in der Eintrittspupille 52 des Objektivs 12 bzw. anhand der Positionierung der Blendenöffnung 39 der Aperturblende 38 und des Vergrößerungsmaßstabs, mit dem die Aperturblende 38 in die Eintrittspupille 52 des Objektivs 12 abgebildet wird.

In einem zweiten Schritt S2 werden die beiden räumlich voneinander getrennten Reflexionslichtbündel 54a, 54b durch die beiden Teilreflexionen an der Vorderfläche 64 bzw. der Rückfläche 68 des Deckglases 24 generiert.

In einem dritten Schritt S3 werden die beiden Reflexionslichtbündel 54a, 54b auf den positionssensitiven Detektor 60 geleitet. Da die beiden Reflexionslichtbündel 54a, 54b räumlich voneinander getrennt sind, treffen sie an unterschiedlichen Einfallsorten auf den positionssensitiven Detektor 60.

In einem vierten Schritt S4 werden die im Weiteren als $I_a$ bzw. $I_b$ bezeichneten Intensitäten der beiden Reflexionslichtbündel 54a, 54b durch den positionssensitiven Detektor 60 erfasst. Dies geschieht beispielsweise durch Integration der in Figur 4 dargestellten Intensitätsverteilung V. So sind die Flächen unterhalb der beiden Peaks P1, P2 der Intensitätsverteilung V jeweils ein Maß für die Intensität des jeweiligen Reflexionslichtbündels 54a, 54b. Durch Integration des Messsignals oder einer an den jeweiligen Peak P1, P2 angepassten Kurve, z.B. einer Gauß-Kurve, kann so die jeweilige Intensität $I_a$, $I_b$ bestimmt werden.

In einem fünften Schritt S5 wird schließlich der Brechungsindex des Einbettmediums 26 auf Grundlage der Intensitäten $I_a$, $I_b$ der beiden Reflexionslichtbündel 54a, 54b ermittelt. Grundlage hierfür sind die folgenden Überlegungen.

Im Folgenden wird erläutert, wie sich die Intensitäten $I_a$, $I_b$ der beiden Reflexionslichtbündel 54a und 54b im Einzelnen berechnen lassen.

Die Intensität $I_a$ des Reflexionslichtbündels 54a ergibt sich nach folgender Beziehung:

$$I_a = \left(S \cdot R_{a\perp} + (1 - S) \cdot R_{a\parallel}\right) \cdot I \qquad (1)$$

Dabei bezeichnen $R_{ai}$ die Reflexionsgrade der durch das Deckglas 24 und das Immersionsmedium 28 gebildeten Grenzfläche 64 für senkrecht ($i = \perp$) und parallel ($i = \parallel$) polarisiertes Licht, das unter einem Winkel 90° - $\alpha$ einfällt und vorliegend durch das Messlichtbündel 34 gegeben ist. Ferner bezeichnet S den Intensitätsanteil von senkrecht polarisiertem Licht und $I$ die Intensität des Messlichtbündels 34.

Die Intensität $I_b$ des Reflexionslichtbündels 54b ergibt sich nach folgender Beziehung:

$$I_b = \left(S \cdot T_{a\perp} \cdot R_{b\perp} \cdot T'_{a\perp} + (1 - S) \cdot T_{a\parallel} \cdot R_{b\parallel} \cdot T'_{a\parallel}\right) \cdot I \qquad (2)$$

Hier bezeichnen $R_{bi}$ und $T_{bi}$ den Reflexions- bzw. Transmissionsgrad der durch das Deckglas 24 und das Einbettmedium 26 gebildeten Grenzfläche 68 für senkrecht ($i = \perp$) und parallel ($i = \parallel$) polarisiertes Licht, das unter einem Winkel 90° - $\beta$ einfällt und vorliegend durch den transmittierten Teil 66 des Beleuchtungslichtbündels 34 gegeben ist. $T_{ai}$ bezeichnet die Transmissionsgrade der ersten Grenzfläche 64 für senkrecht ($i = \perp$) und parallel ($i = \parallel$) polarisiertes Licht, das unter einem Winkel 90° - $\alpha$ einfällt und vorliegend durch das Messlichtbündel 34 gegeben ist. Ferner bezeichnet $T'_{ai}$ die Transmissionsgrade der Grenzfläche 64 für senkrecht ($i = \perp$) und parallel ($i = \parallel$) polarisiertes Licht, das unter einem Winkel 90° - $\beta$ einfällt und vorliegend durch den Teil gegeben ist, der an der Grenzfläche 68 zurück in Richtung des Objektivs 12 reflektiert wird.

Das Verhältnis der beiden Intensitäten $I_a$, $I_b$ ist von der Intensität $I$ des Messlichtbündels 34 unabhängig, wie die folgende Beziehung zeigt:

$$\frac{I_b}{I_a} = \frac{\left(S \cdot T_{a\perp} \cdot R_{b\perp} \cdot T'_{a\perp} + (1-S) \cdot T_{a\parallel} \cdot R_{b\parallel} \cdot T'_{a\parallel}\right)}{\left(S \cdot R_{a\perp} + (1-S) \cdot R_{a\parallel}\right)} \qquad (3)$$

Somit handelt sich vorliegend um eine selbstreferentielle Messung. Die Reflexions- und Transmissionsgrade $R_i$ und $T_i$ können mithilfe der Fresnelschen Formeln (siehe BORN und WOLF, Principles of Optics, Cambridge University Press, 7. Auflage, 1999, Seiten 40 bis 45), auf Grundlage der Brechungsindizes der optischen Medien 26, 28 an den Grenzflächen 64, 68 und der numerischen Apertur des einfallenden Messlichtbündels 34 bestimmt werden. Die numerische Apertur des Messlichtbündels 34 lässt sich über die Brennweite des Objektivs 12 und die Position des Messlichtbündels 34 in der Eintrittspupille 52 des Objektivs 12 bestimmen.

Bei bekannter numerischer Apertur des Messlichtbündels 34 und bekannten Brechungsindizes des Immersionsmediums 28 und des Deckglases 24 ist der Brechungsindex des Einbettmediums 26 die einzige Unbekannte und kann anhand der Beziehung (3) bestimmt werden. Dies kann analytisch, durch numerische Verfahren oder mithilfe einer Lookup-Tabelle mit austabellierten Werten und Interpolation erfolgen.

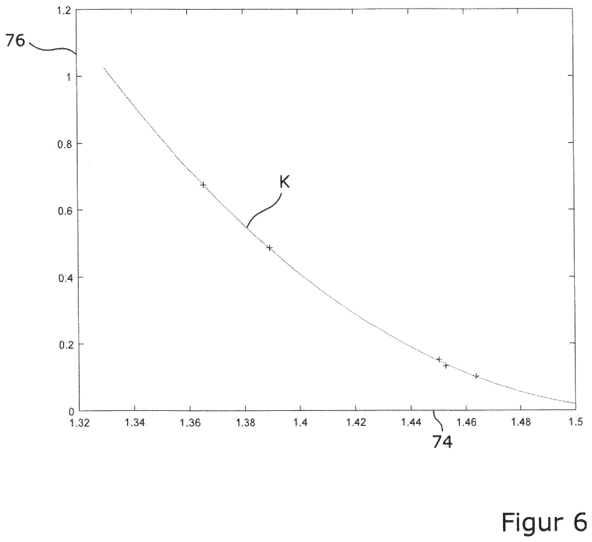

Figur 6 zeigt eine beispielhafte Kennlinie K, die das Verhältnis der beiden Intensitäten $I_a$, $I_b$ in Abhängigkeit des Brechungsindex des Einbettmediums 26 angibt. Auf der Abszissenachse 74 des Diagramms ist der Brechungsindex des Einbettmediums 26 angegeben. Auf der Ordinatenachse 76 des Diagramms ist das Verhältnis der beiden Intensitäten $I_a$, $I_b$ angegeben. Bei der Ermittlung der Intensitäten $I_a$, $I_b$ wurde Wasser als Immersionsmedium 28 verwendet.

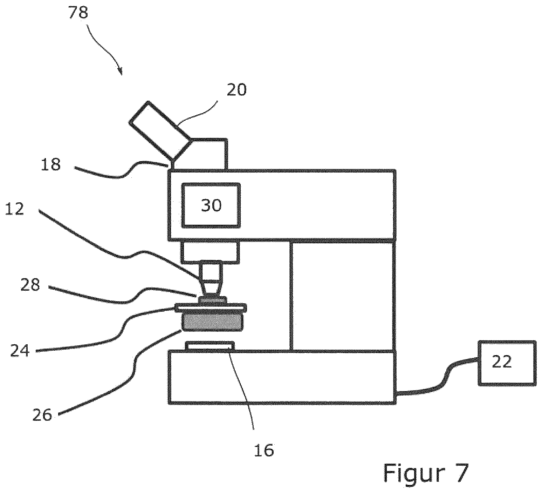

Figur 7 zeigt ein Mikroskop 78, das im Unterschied zu dem in Figur 1 dargestellten Mikroskop 10 als aufrechtes Durchlichtmikroskop ausgeführt ist. Dabei sind in Figur 7 diejenigen Mikroskopkomponenten, die den Komponenten des Mikroskops 10 nach Figur 1 entsprechen, mit den schon in Figur 1 verwendeten Bezugzeichen versehen.

Im Unterschied zur Ausführungsform nach Figur 1 ist bei dem in Figur 7 dargestellten Mikroskop das Objektiv 12 oberhalb des Probenraums 18 angeordnet, während sich die Lichtquelle 16 unterhalb des Probenraums 18 befindet. Dementsprechend befindet sich das Immersionsmedium 28, das zum einen an das Objektiv 12 und zum anderen an das Deckglas 24 grenzt, oberhalb des Deckglases 24, während sich das Einbettmedium 26, dessen Brechungsindex erfindungsgemäß zu bestimmen ist, unterhalb des Deckglases 24 angeordnet ist.

Die erfindungsgemäße Bestimmung des Brechungsindex des Einbettmediums 28 erfolgt bei dem Mikroskop 78 nach Figur 7 in gleicher Weise wie bei dem in Figur 1 gezeigten Mikroskops 10.

Die Erfindung wurde vorstehend anhand spezieller Ausführungsbeispiele erläutert. Es versteht sich von selbst, dass die Erfindung nicht auf diese Ausführungsbeispiele beschränkt ist und eine Reihe von Abwandlungen möglich sind.

So entsteht in dem Beispiel nach Figur 3 an der Vorderfläche 64 des Deckglases 24 ein fokussiertes Bild und an der Rückfläche 68 des Deckglases 64 ein defokussiertes Bild der Spaltblende 33. Es ist jedoch umgekehrt ebenso möglich, dass das fokussierte Spaltbild an der Rückseite 68 und das fokussierte Spaltbild an der Vorfläche 64 des Deckglases 24 zu erzeugen. Auch kann die Fokusebene innerhalb des Deckglases 24 liegen, so dass keines der beiden Spaltbilder fokussiert ist.

Bezugszeichenliste

| | |
|---|---|
| 10 | Mikroskop |
| 12 | Objektiv |
| 14 | Probenraum |
| 16 | Lichtquelle |
| 18 | Tubus |
| 22 | Steuereinheit |
| 20 | Okular |
| 24 | Deckglas |
| 26, 28 | optisches Medium |
| 30 | Einrichtung |
| 32 | Lichtquelle |
| 33 | Spaltblende |
| 34 | Messlichtbündel |
| 36 | Beleuchtungsoptik |
| 38 | Aperturblende |
| 39 | Blendenöffnung |
| 40 | Umlenkprisma |
| 42 | Transportoptik |
| 44 | Fokussierlinse |
| 46 | Streulichtblende |
| 50 | Strahlteiler |
| 52 | Eintrittspupille |
| 54, 54a, 54b | Reflexionslichtbündel |
| 56 | Detektoroptik |
| 58 | Spektralfilter |
| 60 | Detektor |
| 62 | Abbildungsstrahlengang |
| 64, 68 | Oberfläche |
| 66 | transmittiertes Messlichtbündels |
| 70, 74 | Abszisse |
| 72, 76 | Ordinate |

EP 3 867 630 B1

| K | Kennlinie |
|---|---|
| O1, O2, O3 | optische Achse |
| P1, P2 | Spitze |
| V | Intensitätsverteilung |
| a, β | Winkel |

**Patentansprüche**

1. Verfahren zur Bestimmung des Brechungsindex eines optischen Mediums in einem Mikroskop (10, 78), das ein einem Probenraum (14) zugewandtes Objektiv (12) aufweist,

   wobei das optische Medium mit dem zu bestimmenden Brechungsindex eines von zwei optischen Medien (26, 28) ist, die in dem Probenraum (14) an zwei entgegengesetzte Oberflächen (64, 68) eines Deck- oder Tragglases (24) grenzen und dadurch zwei teilreflektierende Grenzflächen bilden, die in unterschiedlichen Abständen von dem Objektiv (12) angeordnet sind,
   wobei sowohl der Brechungsindex des Deck- oder Tragglases als auch der Brechungsindex des anderen von den beiden optischen Medien bekannt ist,
   **dadurch gekennzeichnet, dass**
   ein Messlichtbündel (34) durch das Objektiv (12) unter schrägem Einfall auf das Deck- oder Tragglas (24) gelenkt wird,
   zwei räumlich voneinander getrennte Reflexionslichtbündel (54a, 54b) erzeugt werden, indem das Messlichtbündel (34) jeweils zum Teil an den beiden Grenzflächen reflektiert wird,
   die beiden Reflexionslichtbündel (54a, 54b) durch das Objektiv (12) empfangen und auf einen positionssensitiven Detektor (60) gelenkt werden,
   die Intensitäten der beiden Reflexionslichtbündel (54a, 54b) mittels des positionssensitiven Detektors (60) erfasst werden, und
   auf Grundlage der erfassten Intensitäten der beiden Reflexionslichtbündel (54a, 54b) der Brechungsindex des optischen Mediums ermittelt wird.

2. Verfahren nach Anspruch 1, **dadurch gekennzeichnet, dass** der Brechungsindex des einen optischen Mediums in Abhängigkeit des Brechungsindex des anderen optischen Mediums, des Brechungsindex des Deck- oder Tragglases (24) und der numerischen Apertur des Messlichtbündels (34) ermittelt wird.

3. Verfahren nach Anspruch 1 oder 2, **dadurch gekennzeichnet, dass** der Brechungsindex des einen optischen Mediums auf Grundlage des Verhältnisses der Intensitäten der beiden Reflexionslichtbündel (54a, 54b) ermittelt wird.

4. Verfahren nach einem der Ansprüche 1 bis 3, **dadurch gekennzeichnet, dass** das Messlichtbündel (34) in einen Teilbereich einer Eintrittspupille (52) des Objektivs (12) geleitet wird, der gegenüber der Mitte der Eintrittspupille (52) versetzt ist.

5. Verfahren nach einem der Ansprüche 1 bis 4, **dadurch gekennzeichnet, dass** durch das Messlichtbündel (34) an den beiden Grenzflächen jeweils ein Messmuster erzeugt wird und dass die beiden Messmuster durch die beiden Reflexionslichtbündel (54a, 54b) auf den positionssensitiven Detektor (60) abgebildet werden.

6. Verfahren nach Anspruch 5, **dadurch gekennzeichnet, dass** die beiden auf den positionssensitiven Detektor (60) abgebildeten Messmuster in Form einer räumlichen Intensitätsverteilung (V) erfasst werden, aus der die Intensitäten der beiden Reflexionslichtbündel (54a, 54b) bestimmt werden.

7. Verfahren nach einem der Ansprüche 1 bis 6, **dadurch gekennzeichnet, dass** das eine optische Medium ein Einbettmedium für eine Probe ist, das an eine der beiden Flächen (64, 68) des Deck- oder Tragglases (24) grenzt.

8. Verfahren nach einem der Ansprüche 1 bis 7, **dadurch gekennzeichnet, dass** das andere optische Medium ein Immersionsmedium ist, das an die andere Oberfläche des Deck- oder Tragglases (24) und das Objektiv (12) grenzt.

9. Mikroskop, umfassend:

   einen Probenraum (14) mit einem Deck- oder Tragglas (24) und zwei optischen Medien (26, 28),

ein dem Probenraum (14) zugewandtes Objektiv (12),

zwei teilreflektierende Grenzflächen, die in dem Probenraum (14) in unterschiedlichen Abständen von dem Objektiv (12) angeordnet und

dadurch gebildet sind, dass die beiden optischen Medien (26, 28) in dem Probenraum (14) an zwei entgegengesetzte Oberflächen (64, 68) des Deck- oder Tragglases (24) grenzen, und

eine Einrichtung (30) zur Bestimmung des Brechungsindex eines der beiden optischen Medien (26, 28),

wobei sowohl der Brechungsindex des Deck- oder Tragglases als auch der Brechungsindex des anderen von den beiden optischen Medien bekannt ist,

**dadurch gekennzeichnet, dass** die Einrichtung ausgebildet ist, ein Messlichtbündel (34) durch das Objektiv unter schrägem Einfall auf das Deck- oder Tragglas (24) zu lenken,

die Einrichtung (30) ausgebildet ist, zwei räumlich voneinander getrennte Reflexionslichtbündel (54a, 54b) zu erzeugen, indem das Messlichtbündel (34) jeweils zum Teil an den beiden Grenzflächen reflektiert wird,

die Einrichtung einen positionssensitiven Detektor (60) aufweist und

ausgebildet ist, die beiden Reflexionslichtbündel (54a, 54b) durch das Objektiv (12) zu empfangen und auf den positionssensitiven Detektor (60) zu lenken,

der positionssensitive Detektor (60) ausgebildet ist, die Intensitäten der beiden Reflexionslichtbündel (54a, 54b) zu erfassen, und

die Einrichtung (30) eine Ermittlungseinheit umfasst, die ausgebildet ist,

auf Grundlage der erfassten Intensitäten der beiden Reflexionslichtbündel (54a, 54b) den Brechungsindex des genannten optischen Mediums zu ermitteln.

10. Mikroskop nach Anspruch 9, **dadurch gekennzeichnet, dass** die Einrichtung (30) eine Aperturblende (38) mit einer Blendenöffnung (39) aufweist, die dezentriert mit Abstand zur optischen Achse (O3) des Objektivs (12) angeordnet ist.

11. Mikroskop nach Anspruch 9 oder 10, **dadurch gekennzeichnet, dass** die Einrichtung (30) eine Lichtquelle (32) hat, die das Messlichtbündel (34) im Infrarot-Wellenlängenbereich emittiert.

12. Mikroskop nach einem der Ansprüche 9 bis 11, **dadurch gekennzeichnet, dass** der positionssensitive Detektor (60) ein Zeilendetektor ist.

13. Mikroskop nach einem der Ansprüche 9 bis 12, **dadurch gekennzeichnet, dass** die Ermittlungseinheit einen Speicher hat, in dem Parameter zur Ermittlung des Brechungsindex des optischen Mediums speicherbar sind.

14. Mikroskop nach einem der Ansprüche 9 bis 13, **dadurch gekennzeichnet, dass** die entgegengesetzten Oberflächen (64, 68) des Deck- oder Tragglases (24) planparallel zueinander ausgebildet sind.

15. Mikroskop nach einem der Ansprüche 9 bis 14, **dadurch gekennzeichnet, dass** es ein inverses Mikroskop oder ein aufrechtes Mikroskop ist.


**Claims**

1. A method for determining the refractive index of an optical medium in a microscope (10, 78), which has an objective (12) facing towards a sample chamber (14),

   wherein the optical medium having the refractive index to be determined is one of two optical media (26, 28), which border two opposing surfaces (64, 68) of a cover slip or object carrier (24) in the sample chamber (14) and thus form two partially reflective interfaces, which are arranged at different distances from the objective (12),

   wherein both the refractive index of the cover slip or object carrier and the refractive index of the other of the two optical media is known,

   **characterized in that**

   a measurement light beam (34) is deflected by the objective (12) with oblique incidence on the cover slip or object carrier (24);

   two reflection light beams (54a, 54b) spatially separated from one another are generated, by the measurement light beam (34) being partially reflected at each of the two interfaces;

   the two reflection light beams (54a, 54b) are received by the objective (12) and are directed onto a position-sensitive detector (60);

the intensities of the two reflection light beams (54a, 54b) are detected by the position-sensitive detector (60), and on the basis of the detected intensities of the two reflection light beams (54a, 54b), the refractive index of the optical medium is determined.

2. The method according to claim 1, **characterized in that** the refractive index of the one optical medium is determined as a function of the refractive index of the other optical medium, the refractive index of the cover slip or object carrier (24), and the numerical aperture of the measurement light beam (34).

3. The method according to claim 1 or 2, **characterized in that** the refractive index of the one optical medium is determined based on a ratio of the intensities of the two reflection light beams (54a, 54b).

4. The method according to any one of the claims 1 to 3, **characterized in that** the measurement light beam (34) is directed into a section of an entry pupil (52) of the objective (12) which is offset in relation to the center of the entry pupil (52).

5. The method according to any one of the claims 1 to 4, **characterized in that** a measurement pattern is generated at each of the two interfaces by the measurement light beam (34), and that the two measurement patterns are imaged by the two reflection light beams (54a, 54b) on the position-sensitive detector (60).

6. The method according to claim 5, **characterized in that** the two measurement patterns imaged on the position-sensitive detector (60) are registered in the form of a spatial intensity distribution (V), from which the intensities of the two reflection light beams (54a, 54b) are determined.

7. The method according to any one of the claims 1 to 6, **characterized in that** the one optical medium is an embedding medium for a sample which borders one of the two surfaces (64, 68) of the cover slip or object carrier (24) .

8. The method according to any one of the claims 1 to 7, **characterized in that** the other optical medium is an immersion medium which borders the other surface of the cover slip or object carrier (24) and the objective (12).

9. A microscope, comprising:

a sample chamber (14) having a cover slip or object carrier (24) and two optical media (26, 28);
an objective (12) facing toward the sample chamber (14); two partially reflective interfaces, which are arranged in the sample chamber (14) at different distances from the objective (12) and are formed such that the two optical media (26, 28) in the sample chamber (14) border two opposing surfaces (64, 68) of the cover slip or object carrier (24); and
a device (30) for determining the refractive index of one of the two optical media (26, 28),
wherein both the refractive index of the cover slip or object carrier and the refractive index of the other of the two optical media is known,
**characterized in that** the device is configured to deflect a measurement light beam (34) through the objective with oblique incidence on the cover slip or object carrier (24) ;
the device (30) is configured to generate two reflection light beams (54a, 54b) spatially separated from one another **in that** the measurement light beam (34) is partially reflected at each of the two interfaces;
the device has a position-sensitive detector (60) and is configured to receive the two reflection light beams (54a, 54b) through the objective (12) and to direct the two reflection light beams onto the position-sensitive detector (60);
the position-sensitive detector (60) is configured to register the intensities of the two reflection light beams (54a, 54b), and
the device (30) comprises a determining unit configured to determine the refractive index of said optical medium based on the registered intensities of the two reflection light beams (54a, 54b).

10. The microscope according to claim 9, **characterized in that** the device (30) has an aperture diaphragm (38) having a diaphragm opening (39), which is arranged in a decentered manner at a distance to the optical axis (O3) of the objective (12).

11. The microscope according to claim 9 or 10, **characterized in that** the device (30) has a light source (32) that emits the measurement light beam (34) in the infrared wavelength range.

**12.** The microscope according to any one of the claims 9 to 11, **characterized in that** the position-sensitive detector (60) is a line detector.

**13.** The microscope according to any one of the claims 9 to 12, **characterized in that** the determining unit includes a memory, in which parameters for determining the refractive index of the optical medium are storable.

**14.** The microscope according to any one of the claims 9 to 13, **characterized in that** the opposing surfaces (64, 68) of the cover slip or object carrier (24) are formed plane-parallel to one another.

**15.** The microscope according to any one of the claims 9 to 14, **characterized in that** the microscope is an inverse microscope or an upright microscope.

**Revendications**

**1.** Procédé de détermination de l'indice de réfraction d'un milieu optique dans un microscope (10, 78) qui présente un objectif (12) faisant face à un espace d'échantillon (14),

le milieu optique ayant l'indice de réfraction à déterminer étant l'un de deux milieux optiques (26, 28) qui, dans l'espace d'échantillon (14), sont adjacents à deux surfaces opposées (64, 68) d'un verre de couverture ou de support (24) et forment ainsi deux surfaces limites partiellement réfléchissantes qui sont agencées à des distances différentes de l'objectif (12), l'indice de réfraction du verre de couverture ou de support ainsi que l'indice de réfraction de l'autre des deux milieux optiques étant connus,
**caractérisé en ce que**
un faisceau lumineux de mesure (34) est dirigé à travers l'objectif (12) sur le verre de couverture ou de support (24) sous incidence oblique,
deux faisceaux lumineux de réflexion (54a, 54b) séparés l'un de l'autre dans l'espace sont générés par le fait que le faisceau lumineux de mesure (34) est réfléchi respectivement en partie sur les deux surfaces limites,
les deux faisceaux lumineux de réflexion (54a, 54b) sont collectés à travers l'objectif (12) et dirigés sur un détecteur sensible à la position (60),
les intensités des deux faisceaux lumineux de réflexion (54a, 54b) sont détectées au moyen du détecteur sensible à la position (60), et
l'indice de réfraction du milieu optique est déterminé sur la base des intensités détectées des deux faisceaux lumineux de réflexion (54a, 54b).

**2.** Procédé selon la revendication 1, **caractérisé en ce que** l'indice de réfraction de l'un des milieux optiques est déterminé en fonction de l'indice de réfraction de l'autre milieu optique, de l'indice de réfraction du verre de couverture ou de support (24) et de l'ouverture numérique du faisceau lumineux de mesure (34).

**3.** Procédé selon la revendication 1 ou 2, **caractérisé en ce que** l'indice de réfraction de l'un des milieux optiques est déterminé sur la base du rapport des intensités des deux faisceaux lumineux de réflexion (54a, 54b) .

**4.** Procédé selon l'une quelconque des revendications 1 à 3, **caractérisé en ce que** le faisceau lumineux de mesure (34) est guidé dans une zone partielle d'une pupille d'entrée (52) de l'objectif (12) qui est décalée par rapport au centre de la pupille d'entrée (52).

**5.** Procédé selon l'une quelconque des revendications 1 à 4, **caractérisé en ce qu'**un modèle de mesure est généré par le faisceau lumineux de mesure (34) sur chacune des deux surfaces limites et **en ce que** les deux modèles de mesure sont reproduits par les deux faisceaux lumineux de réflexion (54a, 54b) sur le détecteur sensible à la position (60).

**6.** Procédé selon la revendication 5, **caractérisé en ce que** les deux modèles de mesure reproduits sur le détecteur sensible à la position (60) sont détectés sous la forme d'une distribution d'intensité spatiale (V) à partir de laquelle les intensités des deux faisceaux lumineux de réflexion (54a, 54b) sont déterminées.

**7.** Procédé selon l'une quelconque des revendications 1 à 6, **caractérisé en ce que** l'un des milieux optiques est un milieu d'enrobage pour un échantillon, qui est adjacent à l'une des deux surfaces (64, 68) du verre de couverture ou de support (24).

8. Procédé selon l'une quelconque des revendications 1 à 7, **caractérisé en ce que** l'autre milieu optique est un milieu d'immersion qui est adjacent à l'autre surface du verre de couverture ou de support (24) et à l'objectif (12).

9. Microscope, comprenant :

un espace d'échantillon (14) avec un verre de couverture ou de support (24) et deux milieux optiques (26, 28), un objectif (12) faisant face à l'espace d'échantillon (14), deux surfaces limites partiellement réfléchissantes, qui sont agencées dans l'espace d'échantillon (14) à des distances différentes de l'objectif (12) et formées par le fait que les deux milieux optiques (26, 28) dans l'espace d'échantillon (14) sont adjacents à deux surfaces opposées (64, 68) du verre de couverture ou de support (24), et un dispositif (30) pour déterminer l'indice de réfraction de l'un des deux milieux optiques (26, 28), l'indice de réfraction du verre de couverture ou de support ainsi que l'indice de réfraction de l'autre des deux milieux optiques étant connus,
**caractérisé en ce que** le dispositif est configuré pour diriger un faisceau lumineux de mesure (34) à travers l'objectif sur le verre de couverture ou de support (24) sous incidence oblique, le dispositif (30) est configuré pour générer deux faisceaux lumineux de réflexion (54a, 54b) séparés l'un de l'autre dans l'espace par le fait que le faisceau lumineux de mesure (34) est réfléchi respectivement en partie sur les deux surfaces limites, le dispositif présente un détecteur sensible à la position (60) et est configuré pour collecter les deux faisceaux lumineux de réflexion (54a, 54b) à travers l'objectif (12) et les diriger sur le détecteur sensible à la position (60), le détecteur sensible à la position (60) est configuré pour détecter les intensités des deux faisceaux lumineux de réflexion (54a, 54b), et le dispositif (30) comprend une unité de détermination qui est configurée pour déterminer l'indice de réfraction dudit milieu optique sur la base des intensités détectées des deux faisceaux lumineux de réflexion (54a, 54b).

10. Microscope selon la revendication 9, **caractérisé en ce que** le dispositif (30) présente un diaphragme d'ouverture (38) ayant une ouverture de diaphragme (39) qui est décentrée à distance de l'axe optique (O3) de l'objectif (12).

11. Microscope selon la revendication 9 ou 10, **caractérisé en ce que** le dispositif (30) a une source de lumière (32) qui émet le faisceau lumineux de mesure (34) dans la plage de longueurs d'onde infrarouge.

12. Microscope selon l'une quelconque des revendications 9 à 11, **caractérisé en ce que** le détecteur sensible à la position (60) est un détecteur de ligne.

13. Microscope selon l'une quelconque des revendications 9 à 12, **caractérisé en ce que** l'unité de détermination a une mémoire dans laquelle peuvent être stockés des paramètres pour déterminer l'indice de réfraction du milieu optique.

14. Microscope selon l'une quelconque des revendications 9 à 13, **caractérisé en ce que** les surfaces opposées (64, 68) du verre de couverture ou de support (24) sont configurées de manière à être planes et parallèles entre elles.

15. Microscope selon l'une quelconque des revendications 9 à 14, **caractérisé en ce qu'**il s'agit d'un microscope inversé ou d'un microscope vertical.

Figur 1

Figur 2

Figur 3

Figur 4

S1

| Lenken des Bleuchtungslichtbündels unter schrägem Einfall auf das Deckglas |

S2

| Erzeugen zweier räumlich getrennter Messlichtbündel durch Reflektion an den beiden Oberflächen des Deckglases |

| Lenken der beiden Messlichtbündel auf den positionsempfindlichen Sensor | — S3

| Erfassen der Intensitäten der beiden Messlichtbündel durch den positionsempfindlichen Sensor | — S4

| Berechnen des Brechungsindex des optischen Mediums auf Grundlage der Intensitäten der Messlichtbündel |

S5

## Figur 5

Figur 6

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006021996 A1
- DE 102010030430 A1

**In der Beschreibung aufgeführte Nicht-Patentliteratur**

- **J. P. MCCLYMER.** Note: Index of refraction measurement using the Fresnel equations. *REVIEW OF SCIENTIFIC INSTRUMENTS., US,* 01. August 2014, vol. 85 (8), 086107

- **MING-HORNG CHIU et al.** Complex refractive-index measurement based on Fresnel's equations and the uses of heterodyne interferometry. *APPLIED OPTICS, WASHINGTON, DC; US,* 01. Juli 1999, vol. 38 (19), 4047
- **BORN ; WOLF.** Principles of Optics. Cambridge University Press, 1999, 40-45